Europäisches Patentamt

European Patent Office

Office européen des brevets

(19)

(11) Veröffentlichungsnummer: **0 162 423**
**B1**

(12)

# EUROPÄISCHE PATENTSCHRIFT

(45) Veröffentlichungstag der Patentschrift:
15.11.89

(21) Anmeldenummer: 85106079.8

(22) Anmeldetag: 17.05.85

(51) Int. Cl.⁴: **H 02 P 5/175, H 02 P 7/00**

(54) Einrichtung zur Drehzahlregelung.

(30) Priorität: 24.05.84 DE 3419408

(43) Veröffentlichungstag der Anmeldung:
27.11.85 Patentblatt 85/48

(45) Bekanntmachung des Hinweises auf die Patenterteilung:
15.11.89 Patentblatt 89/46

(84) Benannte Vertragsstaaten:
DE FR GB IT

(56) Entgegenhaltungen:
US-A-4 430 605

ELEKTRONIKPRAXIS, Nr. 5, Mai 1984, Seiten 150-155; P.F. BROSCH et al.: "Strom und Spannung, wie gewünscht"
ELEKTRONIK, Band 30, Nr. 21, Oktober 1981, Seiten 79-84, München; K. ZIMMERMANN "Regelung von Wechselstrommotoren mit Mikrocontrollern"
REGELUNGSTECHNIK, Band 30, Nr. 11, November 1982, Seiten 378-387, München; P. MAGYAR et al.: "Digitale Regelung und Steuerung einer stromrichtergespeisten Gleichstrommaschine mit Mikrorechner"

(73) Patentinhaber: AKO- Werke GmbH & Co KG,
Pfannerstrasse 75/79, D-7988 Wangen/Allgäu (DE)

(72) Erfinder: Schotten, Henno, Schulstrasse, D-7989 Argenbühl- Ratzenried (DE)
Erfinder: Kopf, Uwe, Weiherstrasse 60, D-7952 Bad Buchau (DE)

(74) Vertreter: Gaiser, Hartmut, Dipl.- Ing., Sulzbacher Strasse 39, D-8500 Nürnberg 20 (DE)

**Beschreibung**

Die Erfindung betrifft eine Einrichtung nach dem Oberbegriff des Anspruchs 1.

Die Drehzahl eines Reihenschlußmotors, insbesondere eines Universalmotors, kann mittels eines Triacs durch eine Phasenanschnittsteuerung gesteuert werden. Die Erzeugung der Zündimpulse für die Phasenanschnittsteuerung zur richtigen Zeit ist nach dem Stand der Technik aufwendig.

Grundsätzlich ist es bekannt, Regeleinrichtungen mit einem Mikrocomputer bzw. Mikroprozessor aufzubauen. In der Praxis sind solche Schaltungen wegen der nötigen Peripherie aufwendig.

In der US-A 4 430 605 ist eine Regelschaltung für den Motor einer Nähmaschine beschrieben. Dementsprechend ist eine Drehrichtungsumkehr des Motors nicht vorgesehen. Die Regelschaltung arbeitet mit einem Mikrocomputer. Dieser erfaßt über einen Tacho die Drehzahl des Motors. Er berechnet aus dem Drehzahlistwert, einem Drehzahlsollwert und aus der seit dem letzten Phasennulldurchgang verstrichenen Zeit den Zündzeitpunkt für die Phasenanschnittsteuerung des Motors.

Aufgabe der Erfindung ist es, bei einer Einrichtung nach dem Oberbegriff des Anspruchs 1 den Programmablauf zu verbessern und eine Umkehrsteuerung der Drehrichtung des Motors zu integrieren.

Erfindungsgemäß ist obige Aufgabe bei einer Einrichtung nach dem Oberbegriff des Anspruchs 1 durch die Merkmale des kennzeichnenden Teils des Anspruchs 1 gelöst.

Dadurch, daß der Programmablauf mit dem Netz synchronisiert ist, an dem auch die Phasenanschnittsteuerung stattfindet und die Programmroutine für den Zündimpuls während der Halbwelle oftmals abläuft, ist es möglich, die Phasenanschnittsteuerung direkt vom Mikroprozessors aus vorzunehmen. Ohne die Erfindung wäre eine besondere Anpassungsschaltung nötig, die aus dem unter Berücksichtigung des Sollwertes und des Istwertes errechneten numerischen Wert für den dann nötigen Zündwinkel den analogen Zündwinkel bezogen auf die Netzphase ableitet.

Der Istwert der Drehzahl läßt sich auf einfache Weise mittels eines Wechselstrom-Tachogenerators erfassen. Während der Programmroutine der Istwerterfassung wird die Periode der jeweiligen Frequenz des Tachogenerators über ein Zahlverfahren gemessen. Es ist auch möglich, eine Torzeit, in der Tachoimpulse gezählt werden, im Programm zu erzeugen. Um einen großen Drehzahlbereich mit ausreichender Genauigkeit erfassen zu können, kann mit den genannten bei den Methoden gearbeitet werden. Der Mikroprozessor verarbeitet weitere Sollwerte erst beim Stillstand des Motors. Der Mikroprozessor verarbeitet einen Befehl für die zur Umkehrung der Drehrichtung des Motors vorgesehene Schaltung zusammen mit den weiteren Sollwerten. Dadurch ist gewährleistet, daß die Drehrichtungsumschaltung erst erfolgt, wenn der Motor stromlos ist. Dies verbessert die Zuverlässigkeit der Einrichtung.

Durch die Erfassung von Drehzahlschwankungen des Motors ist erreicht, daß die Drehrichtung umgekehrt wird und die Wäsche neu verteilt wird.

Weitere vorteilhafte Ausgestaltungen der Erfindung ergeben sich aus der folgenden Beschreibung eines Ausführungsbeispiels. In der Zeichnung zeigen:

Figur 1　ein Blockschaltbild einer Einrichtung zur Drehzahlregelung und

Figur 2　eine Sinushalbwelle der Netzwechselspannung mit der zeitlichen Verteilung der Programmroutinen eines Mikroprozessors.

An das elektrische Wechselstromnetz 1 ist ein Motor mit einer Feldwicklung 2 und einem Anker 3 angeschlossen. Auf einer Ankerwelle 4 sitzt ein Wechselstrom-Tachogenerator 5. Zur Steuerung der Drehzahl ist dem Motor 2, 3 eine Phasenanschnittsteuerung 6 mit einem Triac vorgeschaltet. Außerdem sind dem Anker 3 Umschaltkontakte 7 vorgeschaltet, die von einem Wenderelais 8 betätigbar sind.

Am Netz 1 liegt ein Netzteil 9, das einen Mikroprozessor 10 speist. Als Mikroprozessor ist ein Standard-Einchip-Mikroprozessor verwendet. Eingangsseitig ist an dem Mikroprozessor 10 ein Sollwertgeber 11 angeschlossen. Falls die Einrichtung bei einer Waschmaschine zum Einsatz kommt, kann der Sollwertgeber 11 von einem Programmschaltwerk gebildet werden.

Der Tachogenerator 5 ist an den Mikroprozessor 10 angeschlossen. Ausgangsseitig liegen am Mikroprozessor 10 die Phasenanschnittsteuerung 6 und das Wenderelais 8.

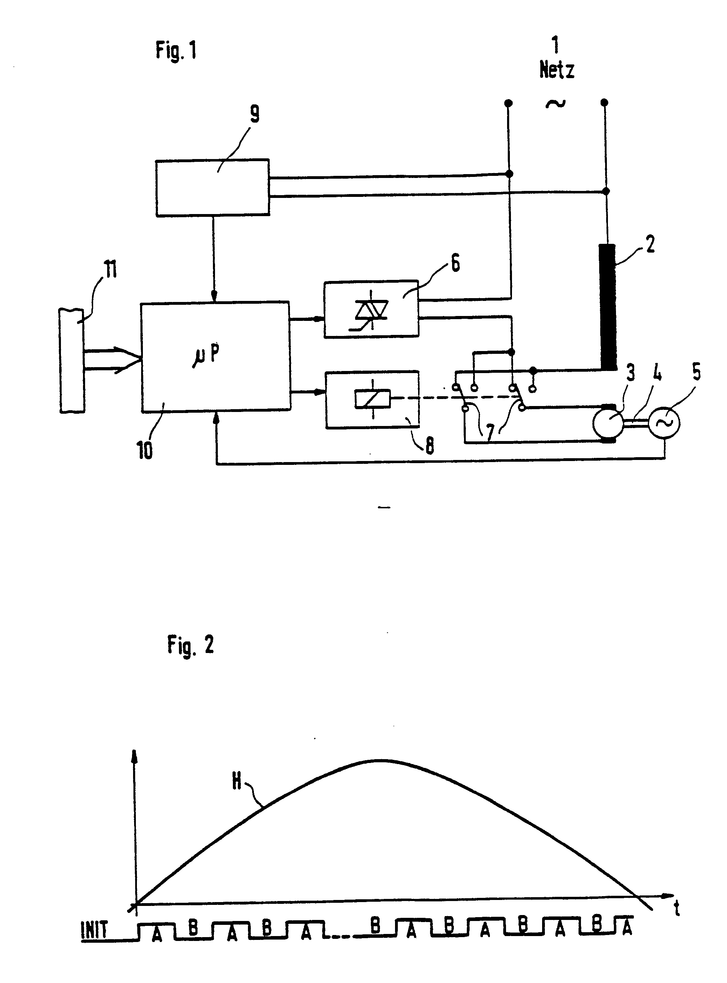

In Figur 2 ist eine Halbwelle H der Netzwechselspannung gezeigt. Innerhalb der Dauer dieser Halbwelle arbeitet der Mikroprozessor 10 immer wieder abwechselnd Programmroutinen A und 9 ab. Bei folgenden Halbwellen wiederholt sich der gleiche Programmroutinenablauf. In der Praxis ist beispielsweise eine 40-malige Wiederholung der Routinen während einer Halbwelle vorgesehen.

Wird die Einrichtung eingeschaltet, dann läuft zunächst eine Programmroutine INIT, mit der der Mikroprozessor 10 initialisiert wird. Bei dem dann folgenden Nulldurchgang der Netzwechselspannung setzt die Programmroutine A ein.

In den Routinen A wird anhand eines im Mikroprozessors 10 implementierten PI-Regelalgorithmus, der Zündwinkel berechnet. Der Sollwert wird codiert, abgefragt und weiterverarbeitet. In der Programmroutine B wird der Istwert der Drehzahl erfaßte. Ist eine entsprechende Regelabweichung gegeben, dann wird in der Programmroutine A ein Zündimpuls an die Phasenanschnittsternerung 6 gegeben. Die möglichen Zündzeitpunkte bzw. Zündwinkel der Phasenanschnittsteuerung 6 sind durch die zeitlichen den der Programmroutinen A in der Sinushalbwelle begrenzt. Diese Begrenzung wirkt sich jedoch in der Praxis nicht aus, da sich die Programmroutine A in der Sinushalbwelle oft wiederholt.

In der Programmroutine A erfolgt außerdem eine Überwachung der Synchronisation der Taktfrequenz des Mikroprozessors 10 mit der Netzfrequenz. Bei Abweichungen wird die Taktfrequenz entsprechend angepaßt.

In der Programmroutine A erfolgt auch eine Überwachung des Motors auf Stillstand. Neue Sollwerte werden nur angenommen, wenn der Motor stillsteht.

In der Programmroutine A wird auch über durch die Istwerterfassung ermittelte Drehzahlschwankungen eine Unwuchtüberwachung vorgenommen. Eine solche mit Drehzahlschwankungen verbundene Unwucht kann bei der Waschmaschine auftreten, wenn die Wäsche ungleichmäßig in der Trommel verteilt ist. Gegebenenfalls erfolgt eine Unwuchtkorrektur dadurch, daß das Wenderelais 8 vom Mikroprozessor 10 umgeschaltet wird, so daß sich die Drehrichtung des Motors kurzzeitig umkehrt, wodurch eine Neuverteilung der Wäsche erfolgt. Das Wenderelais 6 schaltet erst, wenn Stillstand des Motors festgestellt ist.

Wichtig ist vor allem, daß während der überwiegenden Anzahl der Programmroutinen A der Zündzeitpunkt bestimmt ist und gegebenenfalls ein Zündimpuls an die Phasenanschnittsteuerung 6 gegeben wird. Die weiteren in der Programmroutine A ablaufenden beschriebenen Funktionen müssen nicht unbedingt in jeder Programmroutine A erfolgen. So ist, es beispielsweise möglich, die Synchronisationsüberwachung, die Stillstandsüberwachung und die Unwuchtsüberwachung nur einmal während jeder Halbwelle vorzunehmen.

Vorzugsweise werden dann diese Überwachungen gegen Ende der Halbwelle vorgenommen.

Es ist auch möglich, die Berechnung der Regelabweichung der Drehzahl nur einmal in jeder Halbwelle vorzunehmen, wobei der dann ermittelte Wert den Zündzeitpunkt in der nächsten Halbwelle bestimmt.

Solche weiteren Programmroutinen liegen dann in solchen Zeiten, die in Figur 2 für Programmroutinen A gezeigt sind.

## Patentansprüche

1. Einrichtung zur Regelung der Drehzahl eines an das einphasige Wechselstromnetz angeschlossenen Reihenschluß-Waschmaschinenmotors auf einen Sollwert, wobei eine Istwerterfassung und eine Phasenanschnittsteuerung vorgesehen sind und der Sollwert von einem Mikroprozessor (10) abgefragt wird, der innerhalb einer Halbwelle (H) der Netzwechselspannung (1) Programmroutinen (A, B) abarbeitet, wobei durch die eine Programmroutine (B) der Istwert der Drehzahl erfaßt wird und in einer zweiten Programmroutine (A) der Zündzeitpunkt für die Phasenanschnittsteuerung (6) bestimmt ist und gegebenenfalls ein Zündimpuls an die Phasenanschnittsteuerung (6) gegeben wird, dadurch gekennzeichnet, daß der Mikroprozessor (10) mit der Netzwechselspannung synchronisiert ist und gleiche Programmroutinen (A, B) in einer Halbwelle (H) mehrmals abwechselnd abarbeitet und daß in einer weiteren Programmroutine eine Motor-Stillstandsüberwachung erfolgt und der Mikroprozessor (10) weitere Sollwerte erst bei Stillstand des Motors (2, 3) verarbeitet und einen Befehl für eine Schaltung (7, 8) zur Umkehrung der Drehrichtung des Motors (2, 3) zusammen mit den weiteren Sollwerten verarbeitet und daß in einer weiteren Programmroutine eine Überwachung von Drehzahlschwankungen erfolgt und bei Drehzahlschwankungen der Befehl zur kurzzeitigen Umkehrung der Drehrichtung auftritt.

2. Einrichtung nach Anspruch 1, dadurch gekennzeichnet, daß die weiteren Programmroutinen während einer Halbwelle (H) nur einmal erfolgen.

3. Einrichtung nach Anspruch 2, dadurch gekennzeichnet, daß in einer der weiteren Programmroutinen die Berechnung der Regelabweichung der Drehzahl erfolgt.

4. Einrichtung nach Anspruch 2 oder 3, dadurch gekennzeichnet, daß in einer der weiteren Programmroutinen eine Synchronisation der Taktfrequenz des Mikroprozessors mit der Netzfrequenz erfolgt.

## Claims

1. A device for regulating the speed of a series-wound washing-machine motor, which is connected to the single-phase A.C. power supply, to a desired value, wherein an actual-value detection and a phase control are provided and the desired value is interrogated by a microprocessor (10) which executes program routines (A, B) within a half-wave (H) of the A.C. supply voltage (1), the actual value of the speed being detected by the one program routine (B) and the firing moment for the phase control (6) being determined in a second program routine (A) and a firing pulse being delivered to the phase control (6) in the appropriate circumstances, characterised in that the microprocessor (10) is synchronized with the A.C. supply voltage end repeatedly executes toe same program routines (A, B) alternately in one half-wave (H), and that the stopping of the motor is monitored in a further program routine and the microprocessor (10) only processes further desired values when the motor (2, 3) is at a standstill and processes an instruction for a circuit (7, 8) for reversing the direction of rotation of the motor (2, 3) together with the further desired values, and that a monitoring of fluctuations in speed is effected in a further program routine and in the event of fluctuations in speed, the instruction for the brief reversal of the direction of rotation appears.

2. A device according to Claim 1, characterised in that the further program routines occur only once during one half-wave (H).

3. A device according to Claim 2, characterised in that the calculation of the deviation in speed is effected in one of the further program routines.

4. A device according to Claim 2 or 3, characterised in that a synchronization of the clock frequency of the microprocessor with the supply frequency is effected in one of the further program routines.

**Revendications**

1. Dispositif pour le réglage, d'après une valeur de consigne, de la vitesse de rotation d'un moteur en série pour machine à laver relié à un réseau de courant alternatif monophasé, le système comportant une mesure de valeur réelle instantanée et une commande coupure de phase et la valeur de consigne étant interrogée par un microprocesseur (10) qui, à l'intérieur d'une demi-onde (H) de la tension alternative (1) du réseau, traite des routines de programme (A, B), l'une des routines de programme (B) enregistrant la valeur réelle instantanée de la vitesse de rotation, une deuxième routine de programme (A) déterminant le moment de l'allumage pour le dispositif de commande coupure de phase (6) et une impulsion d'allumage étant, le cas échéant, envoyée au dispositif de commande à coupure de phase (6), caractérisé en ce que le microprocesseur (10) est synchronisé avec la tension alternative du réseau et traite alternativement à plusieurs reprises dans une demi-onde (H) des routines de programme identiques (A, B) et en ce que, dans une autre routine de programme, il y a un contrôle de l'arrêt du moteur et un traitement d'autres valeurs de consigne par le microprocesseur (10) qui n'intervient qu'à l'arrêt du moteur (2, 3) et élabore, avec les autres valeurs de consigne, pour un circuit (7, 8), un ordre d'inversion du sens de rotation du moteur (2, 3) et en ce que, dans une autre routine de programme, il y a un contrôle des variations de la vitesse de rotation et, en cas de variation de la vitesse de rotation, émission d'un ordre d'inversion de courte durée du sens de rotation.

2. Dispositif selon la revendication 1, caractérisé en ce que les autres routines de programme ne se produisent qu'une fois pendant une demi-onde (H).

3. Dispositif selon la revendication 2, caractérisé en ce que, dans l'une des autres routines de programme, il y a un calcul de l'écart de réglage de la vitesse de rotation.

4. Dispositif selon la revendication 2 ou 3, caractérisé en ce que, dans l'une des autres routines de programme, il y a synchronisation de la fréquence d'horloge du microprocesseur et de la fréquence de réseau.

Fig. 1

~

9

11

μ P

6

2

3 4 5

10

7

8

—

Fig. 2

H

INIT    A    B    A    B    A    ...    B    A    B    A    B    A    B    A

t

1